(19) Europäisches Patentamt
European Patent Office
Office européen des brevets

(11) Veröffentlichungsnummer : **0 593 518 B1**

(12) **EUROPÄISCHE PATENTSCHRIFT**

(45) Veröffentlichungstag der Patentschrift :
**10.05.95 Patentblatt 95/19**

(51) Int. Cl.⁶ : **H02J 7/10,** H02J 7/02,
H02M 3/338

(21) Anmeldenummer : **92912459.2**

(22) Anmeldetag : **20.06.92**

(86) Internationale Anmeldenummer :
**PCT/DE92/00513**

(87) Internationale Veröffentlichungsnummer :
**WO 93/01642 21.01.93 Gazette 93/03**

(54) **ELEKTRONISCHES SCHALTNETZTEIL.**

(30) Priorität : **08.07.91 DE 4122544**

(43) Veröffentlichungstag der Anmeldung :
**27.04.94 Patentblatt 94/17**

(45) Bekanntmachung des Hinweises auf die
Patenterteilung :
**10.05.95 Patentblatt 95/19**

(84) Benannte Vertragsstaaten :
**AT BE CH DE ES FR GB IT LI NL**

(56) Entgegenhaltungen :
**EP-A- 0 162 341**
**EP-A- 0 383 383**
**WO-A-83/03722**

(73) Patentinhaber : **Braun Aktiengesellschaft**
**Postfach 11 20**
**D-61466 Kronberg (DE)**

(72) Erfinder : **BERGK, Günther**
**Weidenstrasse 9**
**D-6272 Niedernhausen (DE)**

**Beschreibung**

Die Erfindung betrifft ein elektronisches Schaltnetzteil zur Stromversorgung eines Akkumulators aus einer Wechsel- oder Gleichspannungsquelle mit einem primär getakteten Sperrwandler, der einen Übertrager enthält, dessen Sekundärwicklung in Reihe zum Akkumulator und einer ersten Diode und dessen Primärwicklung in Reihe zur Kollektor-Emitter-Strecke eines ersten Transistors geschaltet ist, dessen Basis sowohl über einen Rückkopplungswiderstand und einen Kondensator an das eine Wicklungsende der Sekundärwicklung des Übertragers angeschlossen ist, deren anderes Wicklungsende mit dem Akkumulator verbunden ist, als auch über einen ersten Widerstand mit dem einen Pol der Eingangsspannungsquelle und mit dem Kollektor eines zweiten Transistors verbunden ist, dessen Emitter an Massepotential gelegt ist, wobei der Emitter des ersten Transistors sowohl über einen zweiten Widerstand und den Akkumulator mit Massepotential verbunden als auch über eine Zenerdiode an die Basis des zweiten Transistors angeschlossen ist,wobei eine Kippstufe vorgesehen ist, die den ersten Transistor bei Erreichen einer vorgegebenen oberen Abschaltspannung am Akkumulator sperrt und bei Unterschreiten einer vorgegebenen unteren Einschaltspannung freigibt.

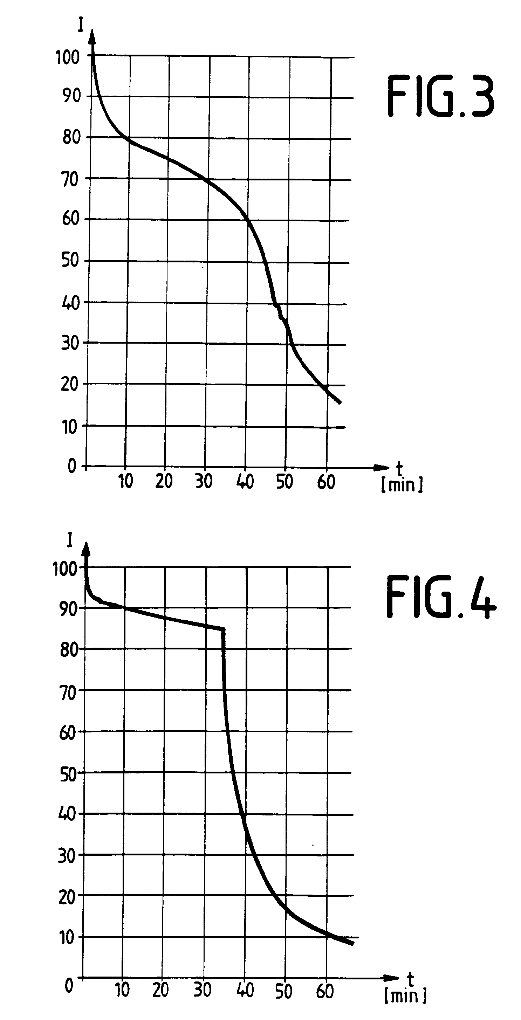

Eine solche Schaltungsanordnung ist aus der EP 0 162 341 B1 bekannt. Die Abschaltung bei Erreichen einer bestimmten Akkumulatorspannung erfolgt dort mittels einer aus dem zweiten Transistor und einem dritten Transistor gebildeten Kippstufe. Sobald die eingestellte Sollspannung erreicht ist, wird der erste Transistor, der als Schalttransistor ausgebildet ist, gesperrt und nach Unterschreitung dieser Sollspannung sofort wieder freigegeben. Bei dieser bekannten Schaltungsanordnung nimmt der Ladestrom nach Ladebeginn bei leerem Akkumulator verhältnismäßig schnell ab (vgl. Fig. 3).

Aus der EP 0 383 383 A1 ist ein elektronisches Schaltnetzteil zur Stromversorgung eines Akkumulators mit parallelschaltbarem Gleichstrommotor aus einer Wechsel- oder Gleichspannungsquelle mit einem primär getakteten Sperrwandler bekannt, der einen Übertrager enthält, dessen Primärwicklung in Reihe zu einem ersten Transistor und einem ersten Widerstand geschaltet ist. Die Sekundärwicklung des Übertragers liegt in Reihe zu einer Diode und dem Akkumulator und ist über die Reihenschaltung eines zweiten Widerstandes und eines Kondensators mit der Basis des ersten Transistors verbunden. Zum Wechsel von Schnelladung auf Erhaltungsladung bei Erreichen einer vorgegebenen Akkumulatorspannung und zur Speisung des Gleichstrommotors mit konstanter Spannung unabhängig von der Last ist eine Schaltung vorgesehen, die einen mit dem Emitter des ersten Transistors verbundenen Spannungsteiler mit zwei in Reihe geschalteten Widerständen und einem zweiten Transistor enthält, dessen Basis an die Verbindung des zweiten Widerstandes mit dem Kondensator angeschlossen ist.

Aufgabe der vorliegenden Erfindung ist es nun, eine Schaltungsanordnung der eingangs genannten Art so auszugestalten,daß eine Schnelladung des Akkumulators in noch kürzerer Zeit (beispielsweise ca. 30 Minuten statt ca. 60 Minuten Ladezeit von leerem Akkumulator bis nahezu vollem Akkumulator) möglich ist, ohne daß der nach Volladung fließende Erhaltungsladestrom unzulässig hoch wird.

Diese Aufgabe wird durch die im Anspruch 1 angegebenen Merkmale gelöst.

Ausgestaltungen sind in den Unteransprüchen wiedergegeben.

Anhand eines in der Zeichnung dargestellten Ausführungsbeispiels soll die Erfindung näher erläutert werden.

Es zeigen:

Fig. 1      ein Ausführungsbeispiel der Erfindung,

Fig. 2      den typischen Verlauf der Zellenspannung beim Laden eines Akkumulators in Abhängigkeit von der eingeladenen Kapazität,

Fig. 3      den Verlauf der Abschaltkennlinie eines Ausführungsbeispiels der aus der EP 0 162 341 B1 bekannten Schaltungsanordnung und

FIG. 4      den Verlauf der Abschaltkennlinie einer Anordnung nach Fig. 1.

Hierbei ist die Abschaltkennlinie eine Funktion des Ladestroms in Abhängigkeit von der Ladezeit eines leeren Akkumulators.

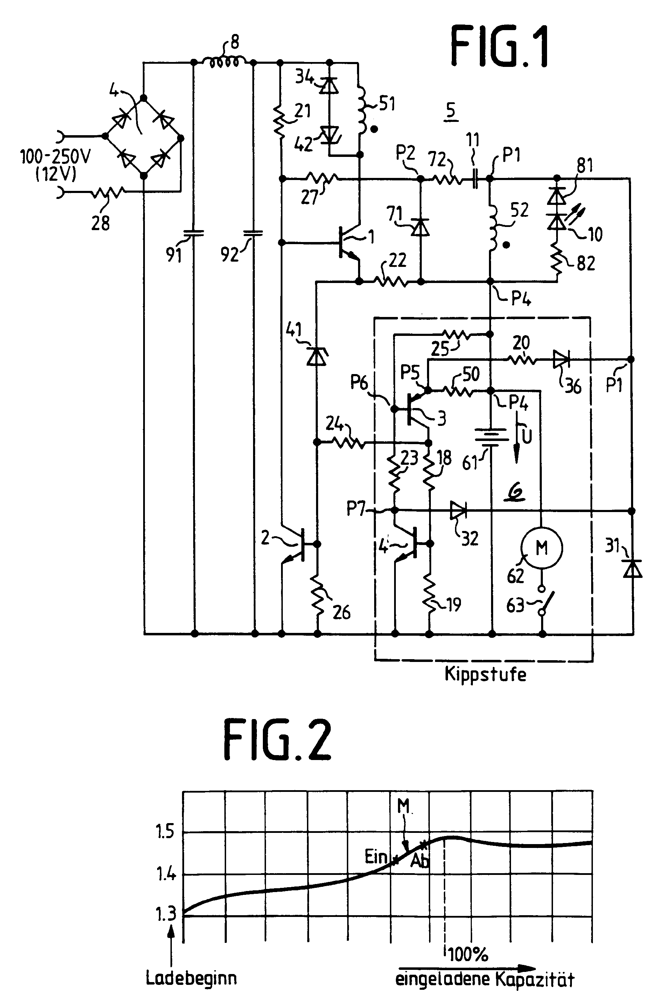

In Figur 1 ist ein elektronisches Schaltnetzteil dargestellt, das aus einem primär getakteten Sperrwandler mit einem Übertrager 5 und einem ersten Transistor 1 sowie einer im Lastkreis vorgesehenen ersten Diode 31 besteht. Der Sperrwandler wird über eine Gleichrichter-Brückenschaltung 4 und einen Widerstand 28 aus einem Gleich- oder Wechselspannungsnetz gespeist, dessen Spannung zwischen 100 und 250 Volt, im Extremfall aber auch 12 Volt, und dessen Frequenz im Falle eines speisenden Wechselspannungsnetzes nahezu beliebig sein kann. Die gleichgerichtete Ausgangsspannung wird über eine Sieb- und Glättungsanordnung, bestehend aus einer Längsdrossel 8 und zwei Glättungskondensatoren 91, 92, an den Eingang des Sperrwandlers bzw. der Steuer- und Regelelektronik gelegt.

Parallel zu den Gleichspannungsklemmen ist die Reihenschaltung der Primärwicklung 51 des Übertragers 5 mit der Kollektor-Emitter-Strecke des ersten Transistors 1, einem zweiten Widerstand 22 und einem Akkumulator 61 geschaltet. An die Basis des ersten Transistors 1 ist ein erster Widerstand 21 angeschlossen, der über die Längsdrossel 8 mit dem positiven Pol der Eingangsspannungsklemme verbunden ist. Darüber hinaus ist die Basis des ersten Transistors 1 über die Kollektor-Emitter-Strecke eines zweiten Transistors 2 mit Masse- oder Bezugspotential verbunden. Der Emitter des ersten Transistors 1 ist an die Kathode einer Zenerdiode 41 angeschlossen, deren Anode sowohl mit der Basis des zweiten Transistors 2 als auch über einen Widerstand 26 mit Masse- oder Bezugspotential verbunden ist. Darüber hinaus ist der Emitter des ersten Transistors 1 über den zweiten Widerstand 22 an ein Wicklungsende (P4) der Sekundärwicklung 52 des Übertragers 5 angeschlossen. Der Wickelsinn der Primär- und Sekundärwicklung des Übertragers 5 ist durch die eingetragenen Punkte angedeutet.

Ein Rückkopplungskondensator 11 ist über einen Rückkopplungswiderstand 27 mit der Basis des ersten Transistors 1 und unmittelbar mit dem einen Wicklungsende (P1) der Sekundärwicklung 52 des Übertragers 5 verbunden. An das andere Wicklungsende (P4) der Sekundärwicklung 52 ist der Verbraucher 6, bestehend aus der Parallelschaltung des Akkumulators 61 mit der Reihenschaltung eines Schalters 63 und eines Gleichstrommotors 62, angeschlossen.

Die Kathode der im Lastkreis angeordneten ersten Diode 31 liegt an dem einen Wicklungsende (P1) der Sekundärwicklung 52 und die Anode an dem mit Bezugspotential verbundenen Ende des Akkumulators 61.

Der Rückkopplungskondensator 11 ist zusätzlich über einen Strombegrenzungswiderstand 72 mit einer Entladediode 71 verbunden, deren Kathode dem Rückkopplungskondensator 11 zugewandt ist (P2) und deren Anode mit dem Pluspol (P4) des Akkumulators 61 in Verbindung steht. Der Sekundärwicklung 52 ist zwischen P1 und P4 die Reihenschaltung einer Schutzdiode 81, einer Leuchtdiode 10 und eines Strombegrenzungswiderstandes 82 parallel geschaltet.

Parallel zum Akkumulator 61 liegt die Reihenschaltung eines Spannungsteilers 25/23 und die Kollektor-Emitter-Strecke eines vierten Transistors 4. An den Verbindungspunkt (P6) der Widerstände 25 und 23 dieses Spannungsteilers ist die Basis eines dritten Transistors 3 gelegt.

Zwischen dem einen Wicklungsende (P1) der Sekundärwicklung 52 und dem Pluspol (P4) des Akkumulators 61 ist die Reihenschaltung einer dritten Diode 36 und eines Spannungsteilers 20/50 angeordnet. An dem Verbindungspunkt (P5) der Widerstände 20 und 50 liegt der Emitter des dritten Transistors 3.

Der Kollektor des dritten Transistors 3 ist sowohl über einen Widerstand 24 mit der Basis des zweiten Transistors 2 als auch über einen Widerstand 18 mit der Basis des vierten Transistors 4 verbunden. Die Basis des vierten Transistors 4 steht außerdem über einen Widerstand 19 mit Bezugspotential in Verbindung. Zwischen den Kollektoranschluß (P7) des vierten Transistors 4 und das eine Wicklungsende (P1) der Sekundärwicklung 52 ist eine zweite Diode 32 eingefügt, wobei der Anodenanschluß dieser zweiten Diode 32 mit dem Kollektoranschluß verbunden ist.

Zur Begrenzung der Rückschlagspannung ist parallel zur Primärwicklung 51 des Übertragers 5 eine Schaltung vorgesehen, die aus der Reihenschaltung einer Zenerdiode 42 mit einer Diode 34 besteht, die anodenseitig miteinander verbunden sind.

Nachstehend soll die Funktionsweise der Schaltungsanordnung gemäß Fig. 1 näher erläutert werden.

Nach der Gleichrichtung mittels der Gleichrichter-Brückenschaltung 4 und Siebung bzw. Glättung mittels der Längsdrossel 8 bzw. der Glättungskondensatoren 91, 92 wird der als Schalttransistor arbeitende erste Transistor 1 über den ersten Widerstand 21 mit einem geringen Basisstrom angesteuert. Infolge des einschaltenden ersten Transistors 1 entsteht über die Schaltstrecke des ersten Transistors 1 und die Primärwicklung 51 des Übertragers 5 ein Mitkopplungseffekt, durch den der erste Transistor 1 zusätzlich angesteuert und in den leitenden Zustand geschaltet wird. Der Kollektorstrom steigt linear an und erzeugt am zweiten Widerstand 22 eine proportionale Spannung. Beim Erreichen eines bestimmten Spitzenstromwertes wird über die Zenerdiode 41 der zweite Transistor 2 angesteuert, gelangt dadurch in den leitenden Zustand und verbindet die Basis des ersten Transistors 1 mit Bezugspotential bzw. Masse und entzieht damit dem ersten Transistor 1 den Basisstrom, woraufhin der erste Transistor 1 sperrt. Mit Beginn der Sperrphase wechselt die Polarität der in der Sekundärwicklung 52 des Übertragers 5 induzierten Spannung am Anschlußpunkt P1 des Rückkopplungskondensators 11. Die im Übertrager 5 gespeicherte Energie wird damit nach dem Prinzip des Sperrwandlers über die erste Diode 31 an den Verbraucher 6 abgegeben.

Während des Umschwingvorganges des Übertragers 5 begrenzen die Diode 34 sowie die Zenerdiode 42 parallel zur Primärwicklung 51 des Übertragers 5 die Rückschlagsspannungsspitze während der Sperrphase.

Da während der gesamten Übertrager-Entladephase negatives Potential am Punkt P1 der Sekundärwicklung 52 entsteht, wird während dieser Zeit der Punkt P7, das heißt der Verbindungspunkt des Widerstandes 23 mit dem Kollektor des vierten Transistors 4, über die zweite Diode 32 auf Bezugspotentioal gelegt (gleiche Schwellenspannung der Dioden 31 und 32 angenommen). Der Spannungsteiler 25/23 ist dabei so dimensioniert, daß während dieser Stromflußphase im Sekundärkreis der dritte Transistor 3, dessen Basis am Punkt P6 des Spannungsteilers liegt und dessen Emitter mit dem Pluspol (P4) des Akkumulators 61 über den Widerstand 50 in Verbindung steht, in der Nähe der Abschaltspannung des Akkumulators 61 gerade leitend wird. Hierdurch wird eine zu frühe Übersteuerung des dritten Transistors 3 vermieden, was in Verbindung mit den später näher erläuterten Hystereseeigenschaften der Schaltung zu einer schärfer ausgeprägten Abschaltkennlinie (vgl. Fig. 3 und 4) führt. Durch den leitenden dritten Transistor 3 wird über den Widerstand 24 auch der zweite Transistor 2 leitend und somit der erste Transistor 1 gesperrt gehalten.

Im Leitzustand des ersten Transistors 1 wurde der Rückkopplungskondensator 11 über den Rückkopplungswiderstand 27 aufgeladen, wobei sich am Punkt P2 des Rückkopplungskondensators 11 eine negative Polarität ausbildete. Diese Ladung mit negativer Polarität am Punkt P2 fließt während der Übertrager-Entladephase über die Entladediode 71 an den Pluspol des Akkumulators 61 ab, so daß auch bei niedriger Eingangsspannung (z.B. 12 Volt) der erste Transistor 1 am Ende der Entladephase verhältnismäßig schnell durchschalten kann, das heißt das Schaltnetzteil leicht wieder anschwingen kann. Der zwischen dem Verbindungspunkt P2 der Kathode der Entladediode 71 mit dem Rückkopplungszweig (11, 27) und dem Kondensator 11 liegende Strombegrenzungswiderstand 72 dient zur Begrenzung des Stromes durch die Entlade diode 71. Dieser Strombegrenzungswiderstand 72 kann auch zwischen die Anode der Entladediode 71 und deren Verbindung mit dem Punkt P4 eingefügt werden.

Die Leuchtdiode (LED) 10 leuchtet während der Übertrager-Entladephase, da während dieser Zeit das Potential am Wicklungsende P4 der Sekundärwicklung 52 positiv gegenüber dem Potential am Wicklungsende P1 ist. Der Widerstand 82 ist ein Strombegrenzungswiderstand. Die Diode 81 dient zum Schutz der LED vor zu großer Spannung während der Durchschaltphase des ersten Transistors T1, wenn am Punkt P1 positives Potential ansteht.

Wie oben beschrieben, liegt der Fußpunkt (P7) des Spannungsteilers 25/23 während der Übertrager-Entladephase auf Bezugspotential und der dritte Transistor 3 ist in der Nähe der Abschaltspannung des Akkumulators 61 leitend. Der Widerstand 25, bzw. ein Teil davon, ist zum Abgleich einstellbar ausgebildet. Der Widerstand 23, bzw. ein Teil davon, ist temperaturabhängig, um den Spannungsverlauf des Akkumulators 61 in Abhängigkeit von der Temperatur nachzubilden.

Wesentlich ist nun, daß während dieser Sfromflußphase im Sekundärkreis der Spannungswert des Abschaltpunktes Ab der Akkumulatorspannung U (vgl. Fig. 2) durch den zwischen dem Pluspol (P4) des Akkumulators 61 und dem Punkt P1 angeordneten Spannungsteiler 50/20 angehoben wird. An den Verbindungspunkt P5 der Widerstände 50 und 20 ist der Emitter des dritten Transistors 3 gelegt, wobei der Widerstand 50 zwischen dem Pluspol (P4) und dem Emitter und der Widerstand 20 zwischen den Emitter und dem Punkt P1 liegt. Die zwischen dem Widerstand 20 und dem Punkt P1 eingefügte dritte Diode 36 dient zur Entkopplung während der Flußphase des ersten Transistors 1, das heißt wenn am Punkt P1 positives Potential herrscht.

Durch diesen Spannungsteiler 50/20 wird während der Übertrager-Entladephase die Abschaltspannung etwa um den Wert (R50 : R20) x U heraufgesetzt (der Widerstand 50 ist hierbei vernachlässigt, da er gegen den Widerstand 20 sehr klein ist), wobei R50 der Wert des Widerstandes 50 und R20 der Wert des Winderstandes 20 ist.

Der genaue Wert der Abschaltspannung Ua ist

$$U_a = U_{CE4} + \frac{R25 + R23}{R25} \left[ U_{BE3} + (I_{C3} + I_{R20}) R50 \right] \quad (1)$$

Hierbei ist $U_{CE4}$ die Kollektor-Emitter-Spannung des durchgeschalteten vierten Transistors 4, $U_{BE3}$ die Basis-Emitter-Spannung des durchgeschalteten dritten Transistors 3, $I_{C3}$ der Kollektorstrom des dritten Transistors 3, $I_{R20}$ der durch den Widerstand 20 fließende Strom und R23, R25, R50 die Werte der Widerstände 23, 25, 50. Dabei ist vorausgesetzt, daß die erste, zweite und dritte Dioden 31, 32 und 36 die gleiche Durchlaßspannung haben, so daß am Punkt P7 und am Verbindungspunkt des Widerstands 20 mit der dritten Diode 36 Bezugspotential anliegt.

Hat nach Beendigung der Übertrager-Entladephase die Akkumulatorspannung U noch nicht die nach Gleichung (1) vorbestimmte Abschaltspannung Ua erreicht, wird der dritte Transistor 3 und damit auch der vierte Transistor 4 gesperrt, das heißt, der aus den Transistoren 3 und 4 gebildete Komparator kippt in den Sperrzustand zurück. Durch den gesperrten dritten Transistor 3 wird der zweite Transistor 2 ebenfalls gesperrt, so daß der erste Transistor 1 für einen neuen Einschaltvorgang freigegeben wird.

Wenn jedoch die Akkumulatorspannung U den Wert des Abschaltpunktes (Abschaltspannung $U_a$) am Ende der Übertrager-Entladephase erreicht oder überschritten hat, bleibt der dritte Transistor 3 und damit auch der zweiten und vierte Transistor 2 und 4 leitend, das heißt der Komparator bleibt im leitenden Zustand. Durch den

4

leitend geschalteten zweiten Transistor 2 kann der erste Transistor 1 nicht einschalten. Das nur während der Sekundärstromflußphase am Punkt P1 anliegende negative Potential ist jetzt nicht mehr vorhanden und damit auch nicht mehr der dadurch über den Widerstand 20 und die dritte Diode 36 erzeugte Spannungsabfall am Widerstand 50.

Dadurch kippt die aus den Transistoren 3 und 4 gebildete Kippstufe (bzw. Komparator) erst dann wieder in den Sperrzustand und gibt somit den ersten Transistor 1 erst dann wieder für einen neuen Einschaltvorgang frei, wenn die Akkumulatorspannung U die Einschaltspannung $U_e$, das heißt einen unteren Spannungswert Ein (vgl. Fig. 2), unterschritten hat. Dieser untere Spannungswert ist

$$U_e = U_{CE4} + \frac{R25 + R23}{R25} (U_{BE3} + I_{C3} \cdot R50) \quad (2)$$

Die Bezeichnungen dieser Gleichung (2) haben die gleiche Bedeutung wie die von Gleichung (1).

Die Differenz zwischen der (oberen) Abschaltspannung $U_a$ und der (unteren) Einschaltspannung $U_e$ (in Fig. 2 mit "Ab" und "Ein" bezeichnet) stellt die gewollte Hysterese der Kippstufe dar. Diese Hysterese ist in weiten Grenzen dimensionierbar.

Der Vorteil einer solchen Schaltungsanordnung mit Hysterese der Kippstufe soll im Vergleich mit der Schaltungsanordnung nach der EP 0 162 341 B1 (Fig. 1), deren Kippstufe bzw. Komparator keine Hystereseeigenschaften aufweist, anhand von Fig. 2, 3 und 4 näher erläutert werden.

Der Abschalt- und Einschaltpunkt des Komparators der Schaltungsanordnung nach der EP 0 162 341 B1 ist auf der Kurve in Fig. 2 (typischer Verlauf der Akkumulatorspannung beim Laden in Abhängigkeit der eingeladenen Kapazität) mit M bezeichnet. Diese Abschalt- und Einschaltspannung $U_M$ des Akkumulators der bekannten Schaltungsanordnung liegt zwischen der Abschaltspannung $U_a$ und der Einschaltspannung $U_e$ der vorliegenden Schaltungsanordnung. Die Spannung $U_M$ kann bei einer Schaltungsanordnung ohne Hysterese nicht beliebig erhöht werden (beispielsweise auf $U_a$), da sonst der Erhaltungsladestrom nach Volladung des Akkumulators zu groß wäre, was dem Akkumulator schadet.

Beim Vergleich der Figuren 3 und 4 (typischer Verlauf der Abschaltkennlinie, das heißt die Abhängigkeit des Ladestromes I, angegeben in Prozent des Anfangsstromes bei leerem Akkumulator, von der Ladezeit t) sieht man, daß der Ladestrom der vorliegenden Anordnung (Fig. 4) bis zur Volladung des Akkumulators nahezu konstant hoch ist und dadurch die Volladung bereits nach ca. 33 Minuten erreicht ist (ausgeprägter Knick der Abschaltkennlinie), während bei der bekannten Anordnung (Fig. 3) der Ladestrom bereits von Anfang an kontinuierlich abnimmt, so daß hier die Volladung des Akkumulators erst nach ca. 60 Minuten erreicht ist. Die in den Akkumulator eingelagerte Ladungsmenge entspricht dem Integral des Ladestroms I über die Ladezeit t. Auch hier sieht man, daß die in den Akkumulator eingelagerte Ladungsmenge (entspricht der Fläche unter den Kurven), die in Fig. 3 nach 60 Minuten erreicht ist, in Fig. 4 bereits nach ca. 33 Minuten erreicht ist.

Aus den Figuren 3 und 4 ist auch ersichtlich, daß trotz des höheren Ladestromes der vorliegenden Schaltungsanordnung (Fig. 4) der Erhaltungsladestrom nach Volladung des Akkumulators nicht höher ist als bei der bekannten Anordnung (Fig. 3).

Ein weiterer Vorteil der vorliegenden Anordnung ist, daß infolge der einstellbaren Hysterese mittels des Spannungsteilers 20/50 die Leuchtdiode 10 bei Annäherung an den Volladezustand des Akkumulators sichtbar und definiert zu blinken beginnt.

Es ist noch anzumerken, daß die Hysterese der aus den Transistoren 3 und 4 gebildeten Kippstufe nicht von internen Rückkopplungen abhängig ist, sondern von dem sich ändernden Potential am Punkt P1 des Sperrwandlers.

**Patentansprüche**

1. Elektronisches Schaltnetzteil zur Stromversorgung eines Akkumulators (61) aus einer Wechsel- oder Gleichspannungsquelle mit einem primär getakteten Sperrwandler, der einen Übertrager (5) enthält, dessen Sekundärwicklung (52) in Reihe zum Akkumulator (61) und einer ersten Diode (31) und dessen Primärwicklung (51) in Reihe zur Kollektor-Emitter-Strecke eines ersten Transistors (1) geschaltet ist, dessen Basis sowohl über einen Rückkopplungswiderstand (27) und einen Rückkopplungskondensator (11) an das eine Wicklungsende (P1) der Sekundärwicklung (52) des Übertragers (5) angeschlossen ist, deren anderes Wicklungsende (P4) mit dem Akkumulator (61) verbunden ist, als auch über einen ersten Widerstand (21) mit dem einen Pol der Eingangsspannungsquelle und mit dem Kollektor eines zweiten Transistors (2) verbunden ist, dessen Emitter an Massepotential gelegt ist, wobei der Emitter des ersten Transistors (1) sowohl über einen zweiten Widerstand (22) und den Akkumulator (61) mit Massepotential verbunden als auch über eine Zenerdiode (41) an die Basis des zweiten Transistors (2) angeschlossen ist, wobei eine Kippstufe vorgesehen ist, die den ersten Transistor (1) bei Erreichen einer vorgegebenen obe-

ren Abschaltspannung ($U_a$) am Akkumulator (61) sperrt und bei Unterschreiten einer vorgegebenen unteren Einschaltspannung ($U_e$) freigibt,
**dadurch gekennzeichnet,**
daß die Kippstufe aus einem dritten Transistor (3) und einem vierten Transistor (4) besteht, daß der Emitter des dritten Transistors (3) an den Verbindungspunkt (P5) eines zwischen dem einen Wicklungsende (P1) der Sekundärwicklung (52) und dem Akkumulator (61) angeordneten ersten Spannungsteilers (20, 50) angeschlossen ist, daß die Basis des dritten Transistors (3) an den Verbindungsspunkt (P6) eines zwischen dem Akkumulator (61) und dem Kollektor (P7) des vierten Transistors (4) angeordneten zweiten Spannungsteilers (25, 23) angeschlossen ist, daß der Emitter des vierten Transistors (4) mit Bezugspotential und der Kollektor (P7) des vierten Transistors (4) über eine zweite Diode (32) mit dem einen Wicklungsende (P1) der Sekundärwicklung (52) verbunden sind und daß der Kollektor des dritten Transistors (3) sowohl mit der Basis des zweiten Transistors (2) als auch mit der Basis des vierten Transistors (4) verbunden ist.

2. Elektronisches Schaltnetzteil nach Anspruch 1, **dadurch gekennzeichnet**, daß im ersten Spannungsteiler (20, 50) zwischen dem Emitter (P5) und dem einen Wicklungsende (P1) der Sekundärwicklung (52) eine dritter Diode (36) angeordnet ist.

3. Elektronisches Schaltnetzteil nach Anspruch 1 oder 2, **dadurch gekennzeichnet**, daß ein Widerstand (23) des zweiten Spannungsteilers (25, 23) temperaturabhängig ausgebildet ist.

4. Elektronisches Schaltnetzteil nach einem der Ansprüche 1 bis 3, **dadurch gekennzeichnet**, daß ein Widerstand (25) des zweiten Spannungsteilers (25, 23) einstellbar ausgebildet ist.

5. Elektronisches Schaltnetzteil nach einem der Ansprüche 1 bis 4, **dadurch gekennzeichnet**, daß das der Sekundärwicklung (52) abgewandte Ende (P2) des Rückkopplungskondensators (11) über eine Entladediode (71) mit dem Akkumulator (61) in Verbindung steht.

6. Elektronisches Schaltnetzteil nach einem der Ansprüche 1 bis 5, **dadurch gekennzeichnet**, daß parallel zur Sekundärwicklung eine Leuchtdiode (10) in Reihe mit einer Schutzdiode (81) geschaltet ist.

## Claims

1. An electronic switched-mode power supply for supplying power to an accumulator (61) from an AC or DC voltage source, with a primary switched-mode flyback converter which includes a transformer (5) having its secondary winding (52) connected in series with the accumulator (61) and a first diode (31), while its primary winding (51) is connected in series with the collector-emitter circuit of a first transistor (1) having its base connected to the one end (P1) of the secondary winding (52) of the transformer (5) through a feedback resistor (27) and a feedback capacitor (11), while the other winding end (P4) is connected to the accumulator (61), the base of the first transistor being further connected, through a first resistor (21), to the one terminal of the input voltage source and to the collector of a second transistor (2) having its emitter connected to ground potential, with the emitter of the first transistor (1) being connected both to ground potential through a second resistor (22) and through the accumulator (61) and, through a Zener diode (41), to the base of the second transistor (2), with a trigger circuit being provided turning the first transistor (1) off when the voltage at the accumulator (61) has reached a predetermined upper turn-off voltage ($U_a$) and turning it on again when the voltage drops below a predetermined lower turn-on voltage ($U_e$),
**characterized in that** the trigger circuit is comprised of a third transistor (3) and of a fourth transistor (4), that the emitter of the third transistor (3) is coupled to the junction (P5) of a first voltage divider (20, 50) arranged between the one end (P1) of the secondary winding (52) and the accumulator (61), that the base of the third transistor (3) is coupled to the junction (P6) of a second voltage divider (25, 23) arranged between the accumulator (61) and the collector junction (P7) of the fourth transistor (4), that the emitter of the fourth transistor (4) is connected to reference potential, and the collector junction (P7) of the fourth transistor (4) is connected, through a second diode (32), to the one end (P1) of the secondary winding (52), and that the collector of the third transistor (3) is connected both to the base of the second transistor (2) and to the base of the fourth transistor (4).

2. The electronic switched-mode power supply as claimed in claim 1, **characterized in that** a third diode (36) is arranged in the first voltage divider (20, 50) between the emitter junction (P5) and the one end (P1) of the secondary winding (52).

3. The electronic switched-mode power supply as claimed in claim 1 or claim 2, **characterized in that** one resistor (23) of the second voltage divider (25, 23) is of the temperature-responsive type.

4. The electronic switched-mode power supply as claimed in any one of the claims 1 to 3, **characterized in that** one resistor (25) of the second voltage divider (25, 23) is of the adjustable type.

5. The electronic switched-mode power supply as claimed in any one of the claims 1 to 4, **characterized in that** the end (P2) of the feedback capacitor (11) on the side facing away from the secondary winding (52) is in communication with the accumulator (61) through a discharge diode (71).

6. The electronic switched-mode power supply as claimed in any one of the claims 1 to 5, **characterized in that** parallel to the secondary winding a light-emitting diode (10) is connected in series with a protective diode (81).


**Revendications**

1. Unité d'alimentation à commutation électronique pour alimenter en courant électrique un accumulateur (61) à partir d'une source de courant alternatif continu, comportant un convertisseur-redresseur qui est activé en cadence sur le primaire et contient un transformateur (5) dont le bobinage secondaire (52) est monté en série avec l'accumulateur (61) d'une première diode (31) et dont le bobinage primaire (51) est monté en série avec le circuit collecteur-émetteur d'un premier transistor (1) dont la base est reliée aussi bien, par l'intermédiaire d'une résistance de rétrocouplage (27) et d'un condensateur de rétrocouplage (11), à une première extrémité (P1) du bobinage secondaire (52) du transformateur (5) dont l'autre extrémité (P4) est reliée avec l'accumulateur (61), qu'également, par l'intermédiaire d'une première résistance (21), avec le premier pôle de la source de tension d'entrée et avec le collecteur d'un second transistor (2) dont l'émetteur est mis au potentiel de masse, étant précisé que l'émetteur du premier transistor (20) est relié aussi bien, par l'intermédiaire d'une seconde résistance (22) et de l'accumulateur (61), avec le potentiel de masse qu'également, par l'intermédiaire d'une diode Zener (41), à la base du second transistor (2), et qu'il est prévu un étage multivibrateur qui, lorsque l'on atteint à l'accumulateur (31) une tension supérieure prédéterminée de mise hors circuit ($U_a$), rend non conducteur le premier transistor (1) et, lorsque l'on passe en dessous d'une tension inférieure prédéterminée de mise en circuit (Ue), le rend conducteur,

caractérisée

par le fait que l'étage multivibrateur est constitué d'un troisième transistor (3) et d'un quatrième transistor (4), que l'émetteur du troisième transistor (3) est relié au point de liaison (P5) d'un premier diviseur de tension (20, 50) disposé entre la première extrémité (P1) du bobinage secondaire (52) et l'accumulateur (61), que la base du troisième transistor (3) est reliée au point de liaison (P6) d'un second diviseur de tension (25, 23) disposé entre l'accumulateur (31) et le collecteur (P7) du quatrième transistor (4), que l'émetteur du quatrième transistor (4) est relié au potentiel de référence et que le collecteur (P7) du quatrième transistor (4) est relié, par l'intermédiaire d'une seconde diode (32), avec la première extrémité (P1) du bobinage secondaire (52), et que le collecteur du troisième transistor (3) est relié aussi bien avec la base du second transistor (2) qu'également avec la base du quatrième transistor (4).

2. Unité d'alimentation à commutation électronique selon la revendication 1, caractérisée par le fait que dans le premier diviseur de tension (20, 50), entre l'émetteur (P5) et la première extrémité (P1) du bobinage secondaire (52) est disposée une troisième diode (36).

3. Unité d'alimentation à commutation électronique selon la revendication 1 ou 2, caractérisée par le fait qu'une résistance (23) du second diviseur de tension (25, 23) est conçue fonction de la température.

4. Unité d'alimentation à commutation électronique selon l'une des revendications 1 à 3, caractérisée par le fait qu'une résistance (25) du second diviseur de tension (25, 23) est conçue réglable.

5. Unité d'alimentation à commutation électronique selon l'une des revendications 1 à 4, caractérisée par le fait que l'extrémité (P2) du condensateur de rétrocouplage (11) située du côté opposé au bobinage secondaire (52) est reliée à l'accumulateur (61) par l'intermédiaire d'une diode de décharge (71).

6. Unité d'alimentation à commutation électronique selon l'une des revendications 1 à 5, caractérisée par le fait qu'une diode électroluminescente (10) est montée, en série avec une diode de protection (81), en parallèle avec le bobinage secondaire.

# FIG.1

Kippstufe

# FIG.2

1.5

1.4

1.3

Ladebeginn

M

Ein Ab

100%

eingeladene Kapazität

FIG.3

FIG.4